(19) Europäisches Patentamt
European Patent Office
Office européen des brevets

(11) **EP 2 696 546 A1**

(12) **EUROPEAN PATENT APPLICATION**

(43) Date of publication:
**12.02.2014 Bulletin 2014/07**

(51) Int Cl.:
***H04L 25/03*** (2006.01)  ***H03H 17/02*** (2006.01)
***H03H 17/04*** (2006.01)

(21) Application number: **12305978.4**

(22) Date of filing: **06.08.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Guenach, Mamoun**
**1830 Machelen (BE)**

• **Forouzan, Amir Reza**
**3000 Leuven (BE)**
• **Maes, Jochen**
**2431 Veerle (BE)**
• **Timmers, Michael**
**3020 Herent (BE)**
• **Moonen, Marc**
**3020 Herent (BE)**

(74) Representative: **ALU Antw Patent Attorneys**
**Intellectual Property and Standards**
**Copernicuslaan 50**
**2018 Antwerp (BE)**

(54) **Time-Reversed Equalization Of Communication Signals**

(57) The present invention relates to an equalizer for removing ISI from a communication signal transiting through a communication channel.

In accordance with an embodiment of the invention, the equalizer comprises a postcursor equalizer (160) and a precursor equalizer (140), the postcursor and precursor equalizers being configured to remove postcursor and precursor ISI respectively from the communication signal. The precursor equalizer is configured to operate on blocks of signal samples that have been time reversed, and the postcursor equalizer is serially coupled to the precursor equalizer along the communication path.

Fig. 2

EP 2 696 546 A1

## Description

### Technical Field of the Invention

The present invention relates to signal equalization, i.e. to the removal of Inter Symbol Interference (ISI) from a communication signal transiting through a communication channel.

### Technical Background of the Invention

Digital transmission typically uses basic pulses that exhibit zero autocorrelation when shifted by an integer multiple of the pulse period T (orthogonal waveforms), yielding zero interference from neighboring pulses when the matched filter output is sampled at the pulse period T for further threshold detection.

The ideal (and non-realizable) Nyquist pulse $h(t) = sinc(t/T)$ satisfies this orthogonal property while minimizing the required transmission bandwidth. The Nyquist pulse spans an infinite number of pulse periods, and overlaps with previous and future pulses. The secondary lobes that precede the main lobe of the pulse signal are referred to as the signal precursor, while the secondary lobes that follow the main lobe of the pulse signal are referred as the signal postcursor. The ideal Nyquist pulse can be suitably approximated as a truncated raised-cosine pulse implemented as two causal root raised-cosine filters used at both the transmitter and the receiver. Filtered Multi-Tone (FMT) modulation technique also uses a set of orthogonal and overlapping waveforms that span multiple pulse periods.

Nonetheless, frequency selective communication channels (as are most physical channels) introduce signal distortion: the pulse shapes are altered and the resulting pulses are no longer orthogonal, i.e. successive pulse values influence each other. This phenomenon is known as Inter Symbol Interference (ISI). The sampled value for a given pulse is influenced by the signal precursors of future pulses, this part of the ISI being therefore referred to as the precursor ISI, and is influenced by the signal postcursor of previous pulses, this part of the ISI being therefore referred to as the postcursor ISI. ISI may severely impair the communication over a dispersive channel and limit the available throughput if not properly addressed.

A specific arrangement, known as an equalizer, aims to compensate for the induced channel distortion and thus to mitigate ISI.

Basically, an equalizer can be implemented as a linear filter that equalizes the frequency response of the communication channel and transmit filter circuitry, thereby achieving an overall constant gain and linear phase over the frequency band of interest (i.e., minimal signal distortion). Examples of linear equalizers are Zero-Forcing (ZF) equalizers or Minimum Mean Square Error (MMSE) equalizers. However, linear equalizers yield a phenomenon known as noise enhancement: the equalizer increases the gain of frequencies that have been strongly attenuated by the channel, but also simultaneously increases the noise energy at those same frequencies.

A Zero-Forcing Decision Feedback Equalizer (ZF-DFE) is a non-linear equalizer that uses previous detector decisions (which are assumed to be noiseless if there are no detection errors) to eliminate the postcursor ISI, in conjunction with a forward linear filter for mitigating the precursor ISI.

Maximum-Likelihood Sequence Detector (MLSD) can also remove the ISI optimally. However, the computational complexity of the MLSD grows exponentially with the channel's impulse response duration and is usually prohibitive in practice.

Adding cyclic prefix for block transmission as in Discrete Multi Tone (DMT) transmission can also help in removing the postcursor ISI. In DMT transmission, the time equalizer is designed so as to shorten the impulse response of the overall channel and make it fit within the cyclic prefix length.

The document entitled "Bidirectional Decision Feedback Equalization and MIMO Channel Training" from Jaiganesh Balakrishnan at Cornell University, and published in August 2002, proposes a new equalization technique known as bidirectional DFE (BiDFE). The precursor ISI is removed by doing a parallel DFE on the time-reversed signal, making the precursor ISI causal. After equalization, the signal is time-reversed back to the original sequence. There are two parallel ZF-DFE equalizing branches used to equalize a) the channel and precursor ISI and b) the channel and postcursor ISI respectively. The equalizer outputs are combined with a diversity combiner, treating both signals as if they come from two different channels. Due to this, perfect precursor and postcursor ISI removal using BiDFE is not guaranteed. For home networks, which have a low noise floor, this non-canceled part may still be the dominating factor in the achievable Signal to Noise and Interference Ratio (SNIR).

### Summary of the Invention

It is an object of the present invention to suppress or to mitigate the aforementioned shortcomings and drawbacks of the prior art.

In accordance with a first aspect of the invention, an equalizer for removing ISI from a communication signal

transiting through a communication channel comprises a postcursor equalizer and a precursor equalizer, the postcursor and precursor equalizers being configured to remove postcursor and precursor ISI respectively from the communication signal. The precursor equalizer is configured to operate on blocks of signal samples that have been time reversed, and the postcursor equalizer is serially coupled to the precursor equalizer along the communication path.

In one embodiment of the invention, the postcursor equalizer forms part of a transmitter, and the precursor equalizer forms part of a receiver coupled to the transmitter via the communication channel.

In one embodiment of the invention, the postcursor equalizer and the precursor equalizer both form part of a receiver coupled to a transmitter via the communication channel.

In one embodiment of the invention, the precursor and/or postcursor equalizer is a linear tap filter, such as a ZF or MMSE linear filter.

In one embodiment of the invention, the precursor and/or postcursor equalizer is a non-linear Decision Feedback Equalizer (DFE).

In one embodiment of the invention, the postcursor equalizer is a non-linear Tomlinson-Harashima precoder forming part of the transmitter.

In one embodiment of the invention, the equalizer further comprises an insertion unit configured to insert a guard time between successive blocks of signal samples.

In one embodiment of the invention, the length of the blocks of signal samples is determined according to a latency requirement.

Instead of combining two decision variables, two linear or non-linear filters are put in series along the communication path. That is, the sequential output of the first filter is fed into the other filter, and not just a single signal sample to be fed into a combiner, together with a single signal sample of the output of the other filter. One filter works in the real time and the other filter works in the reversed time. This allows us to obtain two minimum phase filters resulting in high stability and negligible loss in Signal to Noise and Interference Ratio (SNIR) under all conditions.

The proposed technique can cancel the precursor ISI perfectly in communication systems using e.g. FMT-based modulation and non-minimum phase ISI channels for which perfect ISI cancellation is impossible. The implementation complexity is much smaller than the optimal maximum-likelihood receiver. Moreover, it can remove ISI perfectly, which is not possible using state-of-the-art equalizers. This can increase the achievable SNIR significantly when ISI is the dominant communication impairment.

The proposed technique can be used in wireline as well as wireless communications. For instance, FMT is a strong candidate for cognitive radio systems due to its high spectral confinement when primary and secondary users have to coexist over different frequency bands. FMT is also used in some in-home Power Line Communication (PLC) technologies.

**Brief Description of the Drawings**

The above and other objects and features of the invention will become more apparent and the invention itself will be best understood by referring to the following description of an embodiment taken in conjunction with the accompanying drawings wherein:

- fig. 1 represents a schematic diagram of a single carrier communication system,
- fig. 2 represents an equalizer as per the present invention,
- fig. 3 represents an alternative embodiment of an equalizer, and
- fig. 4 represents a bit rate performance chart for the proposed technique.

**Detailed Description of the Invention**

A novel equalization technique is proposed for a dispersive channel with a matched filter. The folded spectrum of the received pulse can be factored into a minimum-phase causal part and a maximum-phase anticausal part corresponding to the postcursor and precursor ISI, respectively. In a typical implementation, the precursor equalization is carried out based on Truncating and Delaying (T&D) the ideal anticausal precursor equalizer impulse response. In the proposed scheme, a block transmission is adopted, and the precursor equalization is carried out by a time reversal within each block and by using a practical minimum-phase filter. By means of a numerical example, it is shown that the proposed technique achieves improved performance compared to T&D in terms of transmission rate, delay, and implementation complexity.

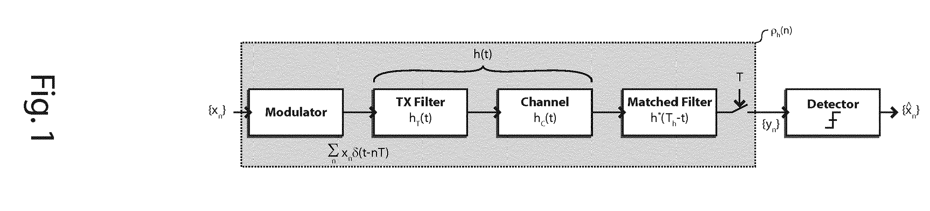

Consider the single-carrier communication system shown in fig. 1, wherein T is the symbol or pulse duration.

An input sequence $\{x_n\}$ modulates successive Dirac pulses $\delta(t-nT)$ that are T seconds apart, thereby yielding a modulated pulse train $\sum\limits_{n} x_n \delta(t-nT)$. The resulting signal goes through a transmit filter and a communication channel with respective impulse responses $h_T(t)$ and $h_C(t)$.

$h(t) = h_T(t) * h_C(t)$ denotes the received pulses, or alternatively the overall channel and transmit filter impulse response with duration Th.

A matched causal filter correlates the receive signal with a known received pulse template. The impulse response of the matched causal filter is h*(Th-t). The matched filter output is sampled every T periods (t=nT), and the sampled value $\{y_n\}$ is compared versus one or more thresholds by a detector (or demodulator) to yield an estimated output sequence $\{\hat{x}_n\}$.

Let $\rho_n[n]$ denote the sampled autocorrelation function of h(t):

$$\rho_h[n]=h(t)*h^*(-t)|_{t=nT}=\int_{+\infty}^{-\infty} h(t)\cdot h^*(t-nT)dt \quad (1).$$

The parameter $Eh = \rho_h[0]$ is the received pulse energy; $\rho_h[n]$ for n > 0 is called the postcursor portion of ISI, i.e. the ISI from past data symbols; and $\rho_h[n]$ for n < 0 is called the precursor portion of ISI, i.e. the ISI from future data symbols. The folded spectrum of h(t), $S_h(z)$, is defined as the Fourier transform of $\rho_h[n]$.

Let:

$$S_h(z)=\gamma^2 M(z)M^*(1/z^*) \quad (2)$$

denote the spectral factorization of Sh(z). M(z) is monic (i.e., $\mu[0] = 1$) and minimum phase with $\mu[n]$ being its time domain representation. As a result M*(1/z*) is monic and maximum phase, wherein * denotes the complex conjugate.

An equalizer consists of a postcursor equalizer and a precursor equalizer, also known as a forward equalizer. The postcursor and precursor equalizers remove the postcursor and precursor ISI respectively.

The transfer function of the postcursor equalizer is given by:

$$E(z)=M^{-1}(z) \quad (3).$$

Since M(z) is minimum phase, E(z) can be implemented easily in practice.

Similarly, the transfer function of the precursor equalizer is given by:

$$D(z)=(M^*(1/z^*))^{-1} \quad (4).$$

Since M(z) is minimum phase, M*(1/z*) and D(z) are maximum phase. Therefore, for D(z) to be stable, it must be anti-causal, meaning that it cannot be implemented in the general case. when D(z) is Finite Impulse Response (FIR), it can be implemented as a causal filter using some delay.

It is easy to show that when the postcursor and precursor equalizers are implemented perfectly, the transfer function of the entire system is the constant and therefore ISI is removed perfectly. Unfortunately, D(z) is not FIR in many cases, e.g. when the channel impulse response is FIR because the inverse of a FIR system has an Infinite Impulse Response (IIR). A multi-path channel is an example of a FIR channel and together with an FIR transmit filter it leads to an FIR received pulse and hence an IIR D(z). An example of a system with a FIR transmit filter is a system using FMT modulation. Conventionally, an IIR anticausal filter is approximated by truncating and delaying in time leading to a causal FIR filter.

A novel technique is proposed to address this problem. The basic idea is to adopt block transmission and implement the precursor equalizer by a time reversal within each block and using a practical minimum-phase filter. Using a numerical example, we compare the performance of our scheme with the T&D scheme. Our results show that the proposed technique can be superior to T&D in terms of bit rate, delay and computational complexity.

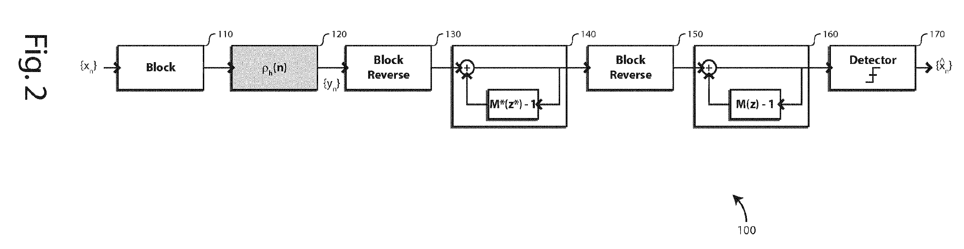

A block diagram of a communication system 100 including the proposed equalization scheme is depicted in fig. 2.

At the transmit side, a delineation unit 110 delineates the input sequence $\{x_n\}$ into groups or blocks $\{x_{mK}; x_{mK+1}; ... ; x_{(m+1)K-1}\}$, wherein m denotes a block index and K denotes the block length.

The modulator, transmit filter, channel, matched filter and sampler are replaced by their equivalent discrete model, i.e. a discrete filter 120 with impulse response $\rho_h[n]$. the so-delineated input sequence $\{x_n\}$ is then fed into the discrete filter 120 and yields an output sequence $\{y_n\}$.

At the receive side, each block $\{y_{mK}; y_{mK+1}; ... ; y_{(m+1)K-1}\}$ is reversed in time by a first time-reversal unit 130, thereby yielding the reversed-time sequence $\{y_{(m+1)K-1}; ...; y_{mK+1}; y_{mK}\}$. The reversed-time sequence is fed through a precursor equalizer 140 with transfer function $(M^*(z^*))^{-1}$, and then reversed back in time by a second time-reversal unit 150. Note that since M(z) is minimum phase, $M^*(z^*)$ is also minimum phase and $(M^*(z^*))^{-1}$ is practical. The signal is further fed through the postcursor equalizer 160 with transfer function $M^{-1}(z)$ for further detection by the detector 170.

It is easy to show that the proposed three-step procedure is equivalent to a filter with the desirable precursor equalizer transfer function $(M^*(1/z^*))^{-1}$. Let y[n] denote the signal at the output of the matched filter with z-transform Y(z). The z-transform for the reversed signal y[-n] is Y(1/z). The z-transform of the output of the filter with transfer function $(M^*(z^*))^{-1}$ is $(M^*(z^*))^{-1} \cdot Y(1/z)$. Finally, the transfer function of the signal when it is reversed back in time is $(M^*(1/z^*))^{-1} \cdot Y(z)$.

The precursor equalizer 140 can be implemented as a feedback loop with open loop gain $M^*(z^*) - 1$; the postcursor equalizer 160 can be implemented as a feedback loop with open loop gain M(z) - 1.

For this to work properly, we need to avoid inter-block interference (IBI), which can be done by adding a guard time Tg at the end of each block. The minimum duration of Tg depends on the system implementation. If we separate the received blocks at the output of the matched filter, Tg should be greater than, or equal to, the length of $\rho[n]$ minus one, i.e. twice the length of the channel impulse response h[n] minus one. If we separate the received blocks at the output of the channel, Tg should be greater than, or equal to, the length of the channel impulse response h[n] minus one.

The latency of the communication system is equal to Tb+Tg, wherein Tb denotes the block length; the bandwidth penalty due to the guard time is equal to Tg/(Tb+Tg); the block length Tb shall be appropriately chosen so as to achieve a good trade off between latency requirements and the corresponding bandwidth penalty.

A few alternative system implementations can be obtained by exchanging the location of the different system blocks.

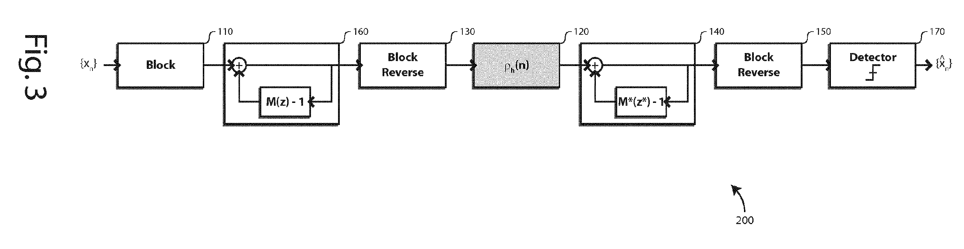

Fig. 3 represents an alternative embodiment 200, wherein the postcursor equalizer 160 and the first time reversal unit 130 have been moved at the transmit side, while the precursor equalizer 140 and the second time reversal unit 150 remains at the receive side. The second time reversal unit may also be moved after the detector 170.

Also, we may move the detector 170 within the feedback loop of the precursor filter 140, thereby yielding a non-linear DFE. Similarly, assuming a limited power modulation, we may add a modulo operator inside the feedback loop of the postcursor filter 160 to obtain a non-linear Tomlinson-Harashima precoder. We may also move the second time-reversal unit 150 after the detector 170.

A practical example with a discrete two-tap FIR channel is now being studied. Let:

$$h[n] = \delta[n] - c\delta[n-1] \quad (5)$$

denote the channel impulse response, where c is a complex-valued constant. The matched filter's impulse response for this channel is $h^*[-n] = \delta[n] - c^*\delta[n + 1]$. In practice we have to delay the matched filter for one sample to obtain a causal filter, which we ignore here. Therefore $\rho[n] = (1+|c|^2)\delta[n] - c^*\delta[n+1] - c\delta[n-1]$ and $S_h(z) = 1+|c|^2 - c^*z - cz^{-1}$.

The spectral factorization of Sh(z) depends on the amplitude of c. Assuming |c| < 1, we obtain $M(z) = 1 - cz^{-1}$. Thus, $E(z) = (1 - cz^{-1})^{-1}$ and $D(z) = (1 - c^*z)^{-1}$. For the postcursor and precursor equalizers to be stable, the Region of Convergence (ROC) should include the unit circle. Since |c| < 1, stability necessitates ROC to be $|z| > |c|$ for the postcursor equalizer E(z). Moreover, the impulse response of the postcursor equalizer is calculated to be $e[n] = c^n u[n]$, which is a causal filter and can be implemented using a feedback loop with open loop gain 1 - M(z).

For D(z), the stability requirement leads to the ROC $|z| < |c|^{-1}$. Therefore, the impulse response is calculated to be $d[n] = c^{*-n}u[-n]$. Since d[n] is an IIR anticausal filter, it is not practically implementable and can be only approximated by some delay.

If we truncate d[n] at n = -L (i.e., set d[n] = 0 for n ≤ -L) and delay it by L-1 samples we obtain the following L-tap FIR approximation for the precursor equalizer:

$$\hat{d}[n] = c^{*L-1-n}(u[n] - u[n-L]) \quad (6).$$

The transfer function of d[n] is:

$$\hat{D}(z) = c^{*L-1} \frac{1-(c^*z)^{-L}}{1-(c^*z)^{-1}} = c^{*L} z \frac{(c^*z)^{-L}-1}{1-c^*z} \quad (7).$$

Thus, the overall transfer function of the system is:

$$S_h(z)\hat{D}(z)E(z) = c^{*L} z((c^*z)^{-L}-1) = z^{-L+1} - c^{*L} z \quad (8),$$

and its impulse response is $h_s[n] = \delta[n-L+1] - c^{*L}\delta[n+1]$. Therefore, the output of the system to the input $x[n]$ is $s[n] = x[n-L+1] - c^{*L}x[n+1]$. As it can be seen, the system is not causal which is because the matched filter is not causal. Note that $x[n-L+1]$ is the desirable signal (delayed by $L-1$ samples) and $-c^{*L}x[n+1]$ is the residue ISI due to the approximation in the precursor equalizer. If $P \equiv E(|x[n]|^2)$, then the desirable signal and ISI power are $P$ and $P|c|^{2L}$ at the output of the postcursor equalizer, respectively.

We assume that the channel noise is white and Gaussian with variance $\sigma^2$. The noise goes through the matched filter and the equalizers with the following transfer function:

$$H_n(z) = c^{*L} z \frac{(c^*z)^{-L}-1}{1-cz^{-1}} \quad (9).$$

Therefore, if we denote the channel noise by $\phi[n]$, the noise contribution at the output of the postcursor equalizer is:

$$v[n] = -c^{*L} \sum_{m=0}^{L-1} c^m \Phi[n-m-1] + c^{*L} \sum_{m=L}^{\infty} c^m (|c|^{-2L}-1)\Phi[n-m-1] \quad (10).$$

From this the noise power is calculated to be:

$$E\{|v[n]|^2\} = \sigma^2 \frac{1-|c|^{2L}}{1-|c|^2} \quad (11).$$

Thus the achievable SNR for the T&D equalizer is:

$$SNR_{T\&D} = \left[ |c|^{2L} + SNR_0^{-1} \frac{1-|c|^{2L}}{1-|c|^2} \right]^{-1} \quad (12),$$

wherein $SNR_0 = P/\sigma^2$ is the SNR of a ISI free lossless channel.

Now let us analyze the performance of the proposed technique for this channel. Using the proposed technique, the ISI is compensated perfectly and the overall system transfer function is 1. The channel noise goes through the matched filter, and the precursor and postcursor equalizers. The matched filter and the precursor equalizer cancel each other.

Therefore, the transfer function for noise in this case is $E(z) = M^{-1}(z)$. Since $E(z)$ is an FIR filter, and because of the block transmission, the noise power depends on the location of the transmitted symbol in the block. The noise power for the n-th received symbol is calculated as:

$$E\{|v[n]|^2\}=\sigma^2\frac{1-|c|^{2(n\,\mathrm{mod}\,K)}}{1-|c|^2}\quad(13),$$

wherein n mod K denotes the reminder of division of n by K, and K denotes the block length.

Thus, the achievable SNR on the n-th received symbol using the Reversed Time Equalizer (RTE) is:

$$SNR_{RTE,n}=SNR_0\frac{1-|c|^2}{1-|c|^{2(n\,\mathrm{mod}\,K)}}\quad(14).$$

The number of bits that can be transmitted per channel use is obtained by the Shannon capacity formula:

$$C=\frac{1}{2}\log_2(1+SNR)\quad(15).$$

The transmitted bits per channel use for the T&D scheme is directly calculated by substituting (12) into (15). For the RTE scheme, we need a guard time of length one in each block for this channel to avoid IBI. Therefore, the average transmitted bits per channel use is calculated as:

$$C=\frac{1}{2K}\sum_{n=1}^{K-1}\log_2(1+SNR_{RTE,n})\quad(16).$$

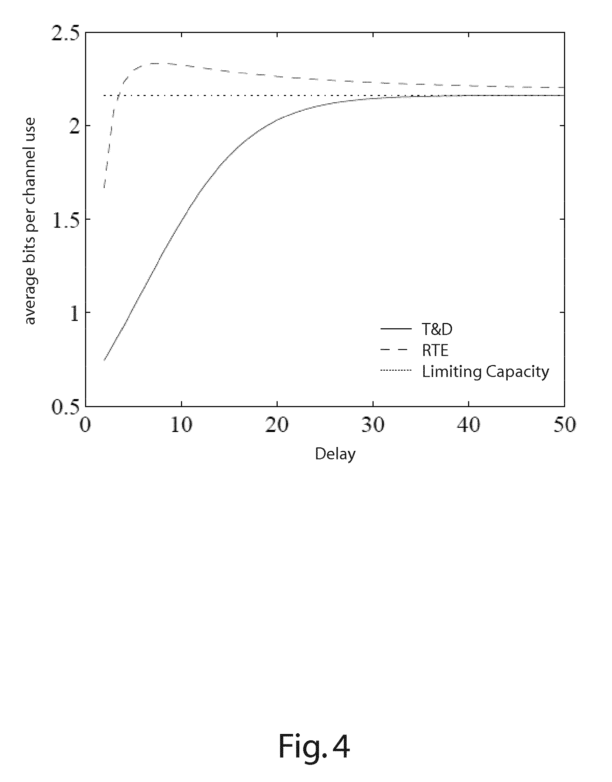

The (average) bits per channel use by the two schemes are plotted vs. the delay in fig. 4 for c = 0,9 and $SNR_0$ = 20dB.

Note that the delay for the T&D scheme is L - 1 and the maximum delay for the RTE scheme is K. The average delay for the RTE scheme is almost K/2. As it can be seen, the achievable rate for the BT-RTE scheme is significantly higher than for the T&D scheme for short delays. Moreover, it can be noticed that the RTE scheme's achievable rate is not an increasing function of the block size (or delay) K. In fact the peak point is located at K = 8, which is about 7,96% higher than the limiting capacity, and a block length of K = 4 is enough to reach the limiting capacity of the T&D scheme. This is because the SNR in (14) decreases by increasing n ($1 \le n < K$).

Finally, note that the computational complexity of the RTE scheme is independent of the block size K and depends on the channel impulse response length. However, the computational complexity of the T&D scheme grows almost linearly with the filter length L.

It is to be noticed that the term 'comprising' should not be interpreted as being restricted to the means listed thereafter. Thus, the scope of the expression 'a device comprising means A and B' should not be limited to devices consisting only of components A and B. It means that with respect to the present invention, the relevant components of the device are A and B.

It is to be further noticed that the term 'coupled' should not be interpreted as being restricted to direct connections only. Thus, the scope of the expression 'a device A coupled to a device B' should not be limited to devices or systems wherein an output of device A is directly connected to an input of device B, and/or vice-versa. It means that there exists a path between an output of A and an input of B, and/or vice-versa, which may be a path including other devices or means.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, a processor should not be construed to refer exclusively to hardware capable of executing software, and may implicitly include, without limitation, digital signal processor (DSP) hardware, network processor, application specific integrated circuit (ASIC), field programmable gate array (FPGA), etc. Other hardware, conventional and/or custom, such as read only memory (ROM), random access memory (RAM), and non volatile storage, may also be included.

**Claims**

1. An equalizer for removing **Inter Symbol Interference ISI** from a **communication signal** transiting through **a communication channel,** and comprising a postcursor equalizer (160) and **a precursor equalizer** (140), the postcursor and precursor equalizers being configured to remove **postcursor and precursor ISI** respectively from the communication signal, *wherein* the precursor equalizer is configured to operate on blocks of signal samples that have been time reversed,
and wherein the postcursor equalizer is serially coupled to the precursor equalizer along the communication path.

2. **An equalizer** according to claim 1, *wherein* the postcursor equalizer forms part of **a transmitter,**
and wherein the precursor equalizer forms part of **a receiver** coupled to the transmitter via the communication channel.

3. **An equalizer** according to claim 1, *wherein* the postcursor equalizer and the precursor equalizer both form part of **a receiver** coupled to **a transmitter** via the communication channel.

4. **An equalizer** according to any of claims 1 to 3, *wherein* the precursor and/or postcursor equalizer is a linear tap filter.

5. **An equalizer** according to any of claims 1 to 3, *wherein* the precursor and/or postcursor equalizer is a non-linear decision feedback equalizer.

6. **An equalizer** according to claim 2, *wherein* the postcursor equalizer is a non-linear Tomlinson-Harashima precoder.

7. **An equalizer** according to any of claims 1 to 6, *wherein* the equalizer further comprises **an insertion unit** configured to insert **a guard time** between successive blocks of signal samples.

8. **An equalizer** according to any of claims 1 to 7, *wherein* the length of the blocks of signal samples is determined according to **a latency requirement.**

9. A **wireless or wireline communication arrangement** comprising **an equalizer** according to any of claims 1 to 8.

Fig. 1

Fig. 2

Fig. 3

Fig. 4

| Europäisches Patentamt European Patent Office Office européen des brevets | **EUROPEAN SEARCH REPORT** | Application Number EP 12 30 5978 |
|---|---|---|

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 117 291 A (FADAVI-ARDEKANI JALIL [US] ET AL) 26 May 1992 (1992-05-26) * columns 1-6 * * figures 1-5 * ----- | 1-9 | INV. H04L25/03 H03H17/02 H03H17/04 |
| X | EDUARDO ABREU ET AL: "Nonminimum Phase Channel Equalization Using Noncausal Filters", IEEE TRANSACTIONS ON SIGNAL PROCESSING, IEEE SERVICE CENTER, NEW YORK, NY, US, vol. 45, no. 1, 1 January 1997 (1997-01-01), XP011057655, ISSN: 1053-587X * the whole document * ----- | 1-9 | |
| X | US 2004/131109 A1 (KIM BYOUNG-HOON [KR] ET AL) 8 July 2004 (2004-07-08) * abstract * * paragraphs [0048], [0050], [0055], [0057], [0064], [0065] * * figure 9 * ----- | 1-9 | |
| A | US 5 627 859 A (PARR MICHAEL [US]) 6 May 1997 (1997-05-06) * abstract * * columns 1,5-8 * * figures 1,4,5 * ----- | 1-9 | TECHNICAL FIELDS SEARCHED (IPC) H04L H03H |
| A | US 2007/194955 A1 (AZIZI SEYED A [DE] AZIZI SEYED ALI [DE]) 23 August 2007 (2007-08-23) * paragraphs [0005], [0024] - [0030], [0032], [0033], [0040], [0041], [0049], [0059] - [0068] * * figure 4 * ----- | 1-9 | |

The present search report has been drawn up for all claims

| Place of search | Date of completion of the search | Examiner |
|---|---|---|
| Munich | 14 November 2012 | Murcia Martinez, J |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 30 5978

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2012

| Patent document cited in search report | | Publication date | Patent family member(s) | | Publication date |
|---|---|---|---|---|---|
| US 5117291 | A | 26-05-1992 | CA | 2052252 A1 | 31-05-1992 |
| | | | DE | 69125349 D1 | 30-04-1997 |
| | | | DE | 69125349 T2 | 10-07-1997 |
| | | | EP | 0488575 A2 | 03-06-1992 |
| | | | JP | 4332224 A | 19-11-1992 |
| | | | US | 5117291 A | 26-05-1992 |
| US 2004131109 | A1 | 08-07-2004 | AU | 2003286696 A1 | 13-05-2004 |
| | | | CA | 2502814 A1 | 06-05-2004 |
| | | | EP | 1556959 A2 | 27-07-2005 |
| | | | HK | 1084516 A1 | 30-04-2010 |
| | | | JP | 4426455 B2 | 03-03-2010 |
| | | | JP | 2006504333 A | 02-02-2006 |
| | | | KR | 20050056268 A | 14-06-2005 |
| | | | TW | I336175 B | 11-01-2011 |
| | | | US | 2004131109 A1 | 08-07-2004 |
| | | | WO | 2004038936 A2 | 06-05-2004 |
| US 5627859 | A | 06-05-1997 | CA | 2153479 A1 | 12-01-1996 |
| | | | EP | 0692871 A1 | 17-01-1996 |
| | | | US | 5627859 A | 06-05-1997 |
| US 2007194955 | A1 | 23-08-2007 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Bidirectional Decision Feedback Equalization and MIMO Channel Training,* August 2002